(19) Europäisches Patentamt
European Patent Office
Office européen des brevets

(11) **EP 1 533 695 B1**

(12) **EUROPEAN PATENT SPECIFICATION**

(45) Date of publication and mention
of the grant of the patent:
**07.08.2013 Bulletin 2013/32**

(51) Int Cl.:
***G06F 9/445*** *(2006.01)*

(21) Application number: **03388075.8**

(22) Date of filing: **19.11.2003**

(54) **Updating data in a mobile terminal**

Aktualisieren von Daten in einem mobilen Endgerät

Mise-à-jour des données dans un terminal mobile

(84) Designated Contracting States:
**AT BE BG CH CY CZ DE DK EE ES FI FR GB GR HU IE IT LI LU MC NL PT RO SE SI SK TR**

(43) Date of publication of application:
**25.05.2005 Bulletin 2005/21**

(73) Proprietor: **Telefonaktiebolaget LM Ericsson (publ)**
**164 83 Stockholm (SE)**

(72) Inventors:
• **Eker, Johan**
**223 55 Lund (SE)**
• **Gehrmann, Christian**
**222 29 Lund (SE)**

• **Svensson, Per**
**226 53 Lund (SE)**

(74) Representative: **Althoff, Fredrik**
**Ericsson AB**
**Patent Unit GL**
**Lindholmspiren 11**
**417 56 Göteborg (SE)**

(56) References cited:
**EP-A- 0 907 285        EP-A- 1 168 165**
**WO-A2-2005/003963   US-A- 5 881 236**
**US-A1- 2002 010 910   US-B1- 6 330 715**
**US-B1- 6 425 125**

# Description

This invention relates to differentially updating stored data in a mobile terminal from a first data version to an updated data version.

Mobile terminals, such as mobile telephones, pagers, electronic organisers, smart phones, personal digital assistants (PDAs), or the like, have become and are continuing to become increasingly software-intense devices. As a consequence thereof there is a great need for proper version management and update facilities for the software stored on mobile terminals. In the future, software bug fixes and standard updates will be a natural part of the life cycle of a mobile terminal and a requirement for the terminal to function properly. Currently, the user of such a mobile terminal typically needs to physically visit an update centre where the terminal is connected, using a wire, to a computer in order to load and install new versions of the systems.

In many respects, this is an unsatisfactory solution. It is expensive for the terminal manufacturer and annoying for the user. Hence, it is desirable to avoid the need for the customer to actually visit an update centre. Furthermore, it is a disadvantage of the above solution that the update time is unnecessarily long, since current practice is to download, each time an update is required or desirable, a complete image of the memory of the mobile terminal.

It has been suggested to introduce over-the-air (OTA) firmware updates for mobile terminals, thereby allowing users to get the latest version of the system software while being at home or on the road. An update may not even have to be initiated by the user, but can be started by e.g. the network operator over the network instead. For example, a critical patch can be distributed to all users of a specific model of a mobile telephone, without the need for them to actively seek new updates.

Hence, in an OTA solution, software updates providing added features and bug-fixes or updates of other data are distributed to the mobile terminal over the air interface. For the purpose of the present description, the old software revision that is present on the mobile terminal is also referred to as the base version, while the new, updated revision is also called updated version or new version. Simply distributing an image of the new revision is unsatisfactory or even impossible for at least two reasons. The download time would become very long and moreover it would require the phone to keep two copies of the software at the same time, which would double the memory requirements. In order to solve the above issues, it has been suggested to only transmit the necessary changes in a so-called delta file. The delta file is constructed to comprise instructions allowing the mobile terminal to generate the new version from the base version and from the delta file, i.e. instructions for a differential update of the base version of the data, thereby reducing the required bandwidth for loading the software update as well as the required storage capacity of the mobile terminal.

US patent 6,018,747 discloses a method of generating in-place delta updates of software on a target system, wherein the delta file comprises "copy" commands and "add" commands identifying changes to be made to the base version in order to arrive at the new version of the software. Hence, according to the above prior art method, upon releasing a new version of software, a delta file is generated from the new and the previous version. The delta file can then efficiently be distributed even over low-bandwidth channels.

However, it is a problem of the above prior art system that it does not address some of the security issues related to OTA software updates. One requirement for secure software updates is the requirement that the resulting updated software version is authentic, i.e. corresponds to the software that is intended to be loaded. Non-authentic or corrupted software may cause the mobile terminal to mal-function or even not to function at all. Corrupted software may be the result of malicious attacks, such as viruses, worms, etc., the result of another form of hacking, such as tampering with licensing functions, or the result of software or hardware errors, e.g. in the case of memory errors.

Hence, it is an object of the present invention to provide an update mechanism for a mobile terminal that provides a high level of security.

The above and other problems are solved by a method of differentially updating stored data, such as data representing software instructions, in a mobile terminal from a first data version to an updated data version, the method comprising

- loading differential update instructions into the mobile terminal; and
- generating the updated data version by the mobile terminal from the stored data and the loaded differential update instructions;

wherein the method further comprises detecting whether the stored data in the mobile terminal includes one or more corrupted portions of the stored data inconsistent with the first data version; and wherein generating the updated data version further comprises repairing any such detected corrupted portions.

Consequently, even if the base version is corrupted, by detecting the corrupted portions of the stored data, during the subsequent generation of the new version it is ensured that the new version is the authentic new version.

Here, the term repairing the corrupted portions of the stored data is intended to comprise generating the corresponding portions of the authentic updated version.

In a preferred embodiment, the method further comprises generating the differential update instructions based on information about the detected corrupted portions of data, if any. Hence, according to this embodiment a modified delta file is generated from the base version and the updated version and based on information about which portions of the stored data, if any, are corrupted, i.e. which portions of the stored data do not correspond to the authentic base version or, at least, are at risk not to correspond with the authentic base version.

For example, if the base version of the software is infected by a virus program, or if the base version has been tampered with, e.g. in order to circumvent license protection mechanisms, this may cause the software update to result in a corrupted memory image that may cause the mobile terminal to malfunction or the terminal may not function at all.

It is understood that, if no corrupted portions are detected, a standard delta file may be generated or, if such a standard delta file has been pre-generated at a previous point in time, retrieved. Such standard delta file may be generated using any suitable method of generating a delta file, e.g. the method disclosed in US patent no. 6,018,747.

In a further preferred embodiment, the differential update instructions include update data; and generating the updated data version comprises replacing predetermined portions of the stored data by said update data. Preferably, if corrupted portions of the data have been detected, the update data include repaired portions of data consistent with the updated data version, the repaired portions of data corresponding to the detected corrupted portions of data.

When generating the differential update instructions comprises generating instructions causing the mobile terminal to generate the updated data version from the stored data excluding the detected corrupted data portions, if any, and from the differential update instructions, only those portions of the base version, which are not corrupted, are used as a source for the differential updating process. Consequently, the risk of propagating the corrupted portions to corresponding or even further portions of the updated version is eliminated.

Here, the term data portion comprises any part of the data that may be identified as such, e.g. data in a certain address range, a section of memory, a memory block, or the like.

Preferably, the differential update instructions are generated on a remote data processing system, such as a software update server. Preferably, the remote data processing system and the mobile terminal communicate via a wireless communications link, e.g. a cellular communications network such as a GSM network, a GPRS network, a UMTS network or another 3G network. The communication may be performed via any suitable communications protocol, e.g. an Internet Protocol (IP), such as TCP/IP, via a short message service (SMS), or any other suitable data transfer mechanism.

In a preferred embodiment, the detection of corrupted portions is performed by the mobile terminal, and the result of the detection is communicated to the remote processing system, thereby reducing the amount of data that needs to be communicated via the air interface between the mobile terminal and the remote data processing system.

In another preferred embodiment, the detection of the corrupted portions is performed cooperatively by the mobile terminal and the remote data processing system. Hence, according to this embodiment, the method further comprises transmitting information about the stored data from the mobile terminal to the remote data processing system; wherein the detecting is performed by the remote data processing system from the transmitted information. It is an advantage of this embodiment that it reduces the computational and memory resources required at the mobile terminal. It is a further advantage of this embodiment that it increases the security of the method, since the detection is not entirely based on processes performed by the mobile terminal that comprises potentially corrupted data or software.

In a further preferred embodiment, the detecting comprises

- calculating a number of checksums by the mobile terminal, wherein each checksum corresponds to a corresponding portion of the data stored in the mobile terminal; and
- comparing the calculated checksums with a number of reference checksums to identify any corrupted portions of data.

Hence, an efficient and reliable mechanism for detecting corrupted portions of the base version is provided. For example, a checksum may be calculated block wise for respective blocks of memory of a predetermined size. When the calculation of the checksums is based on a cryptographically strong one-way hash function, the reliability of the detection mechanism is further increased.

In one embodiment, the reference checksums are stored in the mobile terminal and the comparing is performed by the mobile terminal. Hence, according to this embodiment, the mobile terminal calculates and verifies the checksums and sends the result of the verification to the remote data processing system.

Relying on a detection process performed entirely by the mobile terminal and based on reference checksums stored on the mobile terminal involves a security risk, since the reference checksums themselves may be corrupted, e.g. tampered with. This problem is solved, when the reference checksums stored in the mobile terminal are integrity protected by a message authentication code.

In another preferred embodiment, the reference checksums are stored on the remote data processing system; wherein the transmitted information comprises the calculated checksums; and wherein the detecting further comprises comparing the transmitted calculated checksums by the remote data processing system with the number of reference checksums stored on the remote data processing system. Hence, the storage of the reference checksums does not require storage capacity in the mobile terminal and the reference checksums are not vulnerable against corruption or tampering of the data stored in the mobile terminal.

Further preferred embodiments are disclosed in the dependent claims.

It is noted that the features of the methods described above and in the following may be implemented in software and carried out on a data processing system or other processing means caused by the execution of program code means such as computer-executable instructions. Here and in the following, the term processing means comprises any circuit and/or device suitably adapted to perform the above functions. In particular, the term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

For example, the program code means may be loaded in a memory, such as a RAM, from a storage medium or from another computer via a computer network. Alternatively, the described features may be implemented by hardwired circuitry instead of software or in combination with software.

The present invention can be implemented in different ways including the method described above and in the following, a mobile terminal, data processing system, and further product means, each yielding one or more of the benefits and advantages described in connection with the first-mentioned method, and each having one or more preferred embodiments corresponding to the preferred embodiments described in connection with the first-mentioned method.

The invention further relates to a mobile terminal comprising

- a data memory for storing data;
- communications means adapted to receive from a data processing system differential update instructions for updating data stored in the data memory from a first data version to an updated data version;
- processing means adapted to generate the updated data version from the stored data and from the received differential update instructions;

wherein the processing means is further adapted to generate information from the stored data indicative of the presence or absence of one or more corrupted portions of the stored data inconsistent with the first data version; and to communicate the generated information via the communications means to the data processing system for generating the differential update instructions.

The invention further relates to a data processing system for facilitating differentially updating stored data in a mobile terminal from a first data version to an updated data version, the data processing system comprising means for loading differential update instructions into the mobile terminal, the differential update instructions causing the mobile terminal to generate the updated data version from the stored data and the loaded differential update instructions; wherein the data processing system further comprises

- means for receiving information from the mobile terminal indicative of the presence or absence of one or more corrupted portions of the stored data inconsistent with the first data version; and
- processing means adapted to generate the differential update instructions from the first and updated data versions and from the received information; and to include repair instructions into the differential update instructions, wherein the repair instructions are adapted to cause the mobile terminal to repair any such detected corrupted portions.

The invention further relates to a computer program comprising program code means adapted to cause a data processing system to facilitate differentially updating stored data in a mobile terminal from a first data version to an updated data version by performing the following steps, when the program is executed on the data processing system:

- generating differential update instructions from the first and updated data versions and from information received from the mobile terminal, wherein the received information is indicative of the presence or absence of one or more corrupted portions of the stored data inconsistent with the first data version; wherein generating differential update instructions comprises including repair instructions into the differential update instructions, wherein the repair instructions are adapted to cause the mobile terminal to repair any such detected corrupted portions; and
- loading the generated differential update instructions into the mobile terminal, the differential update instructions causing the mobile terminal to generate the updated data version from the stored data and the loaded differential update instructions.

The term mobile terminal comprises any mobile device comprising suitable circuitry for receiving and/or transmitting communications signals, e.g. radio communications signals, to facilitate data communication. Examples of such devices include portable radio communications equipment and other handheld or portable devices. The term portable radio communications equipment includes all equipment such as mobile telephones, pagers, communicators, i.e. electronic organisers, smart phones, personal digital assistants (PDAs), or the like.

BRIEF DESCRIPTION OF THE DRAWINGS

The above and other aspects of the invention will be apparent and elucidated from the embodiments described in the following with reference to the drawing in which:

fig. 1 schematically shows a block diagram of an embodiment of a system for updating software in a mobile terminal;

fig. 2 schematically shows a block diagram of a mobile terminal according to an embodiment of the invention;

fig. 3 shows a flow diagram of an embodiment of a software update process;

fig. 4 schematically illustrates the calculation and integrity protection of checksums;

fig. 5 schematically shows a block diagram of a mobile terminal according to another embodiment of the invention;

fig. 6 shows a flow diagram of another embodiment of a software update process; and

figs. 7a-b schematically illustrate an embodiment of the generation of a delta file in the absence and presence of corrupted memory blocks, respectively.

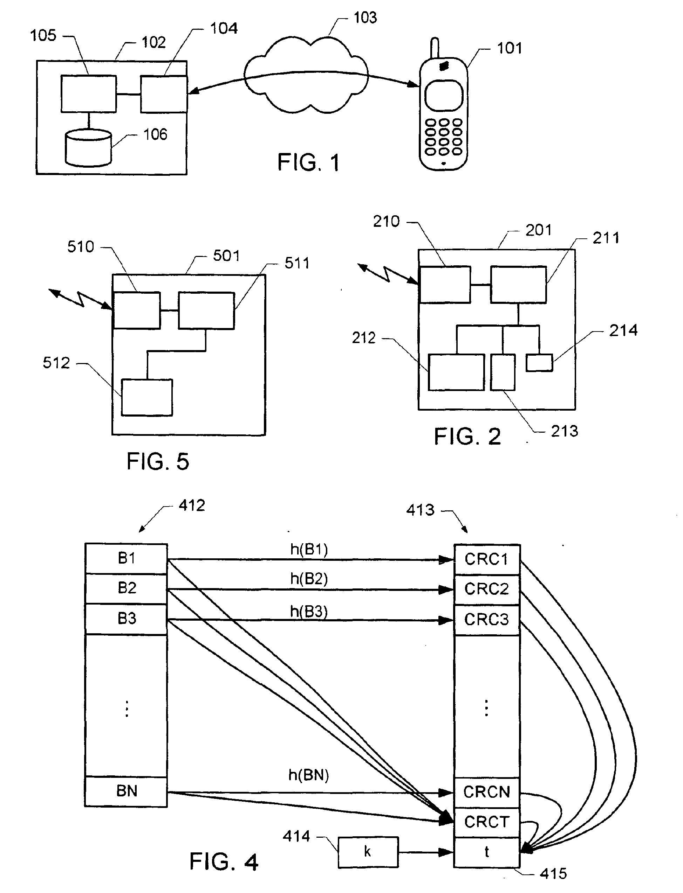

Fig. 1 schematically shows a block diagram of an embodiment of a system for updating software in a mobile terminal. The system comprises a mobile terminal 101, e.g. a mobile telephone or the like, a software updating system 102, and a communications network 103.

The software updating system 102 may comprise a server computer having access to the communications network. In some embodiments, the functionality of the server computer may be distributed among a plurality of computers, e.g. computers connected via a computer network, e.g. a local area network, a wide area network, an Internet, or the like. The software updating system 102 comprises a network interface 104 allowing the software updating system to communicate data via the communications network 103. For example, the network interface may comprise a network card, a DSL modem, a gateway computer, or the like.

The software updating system further comprises a processing unit 105, e.g. the CPU of a server computer, suitably programmed to control and perform the update process including the generation of delta files. The processing unit further comprises a version database 106 having stored therein memory images of at least a base version and an updated version of the software to be updated. In some embodiments, the version database may further comprise additional information, e.g. a plurality of base versions and/or updated versions, e.g. for different models of mobile terminals, for different groups of customers, and/or the like.

The communications network 103 may be any suitable communications network for communicating data between the software updating system 102 and the mobile terminal 101, e.g. using a wireless communications bearer. For example, in the case of a mobile telephone adapted to communicate via a cellular communications network, e.g. a GSM network, a UMTS network, a GPRS network, or the like, the communication between the software updating system and the mobile terminal in connection with a software update is preferably performed via that cellular communications network, thereby avoiding the need for additional communications interfaces in the mobile terminal. It is further understood that the communication between the mobile terminal and the software updating system may involve more than one communications networks. For example, the mobile phone may communicate via a base station and a cellular telecom network with a gateway system that, in turn, provides communication with the software updating system via the Internet.

Hence, in order to update software on the mobile terminal 101, e.g. the firmware or operating system of the mobile terminal, the mobile terminal connects to the software updating system 102. Alternatively, the software updating system may connect to the mobile terminal once an updated software version is available. Once connected to the software updating system, the mobile terminal sends information to the software updating system about its current software version and information about the data currently stored in the memory, which information enables the software updating system to identify memory blocks that are corrupted or at least are at risk of being corrupted. The communication is performed via a suitable updating protocol, e.g. a protocol built on top of a TCI/IP protocol. Based on the information received from the mobile terminal, the software updating system generates a dedicated updating message comprising differential updating instructions to the mobile terminal. The differential updating instructions are generated such that they enable the mobile terminal to generate the updated software version from the existing version already stored in the mobile terminal and from additional information included in the updating instructions. Furthermore, the differential updating instructions are generated such that any corrupted memory block in the mobile terminal will be updated to an authentic block of the updated version and such that any corrupted memory contents are not used in the generation of the updated version by the mobile terminal.

The generation of the delta file generation may schematically be illustrated by the following operations

$$\text{file}_{new} - \text{file}_{base} \rightarrow \Delta\text{file}.$$

Correspondingly, the actual generation of the new version may then be performed by the mobile terminal according to the following operation

$$file_{base} + \Delta file \rightarrow file_{new}.$$

It is understood that the above operations of generating the delta file (denoted as "-" in the above notation) and generating the new version on the mobile terminal (denoted as "+" operation in the above notation) may comprise more or less complex operations.

The delta file may be applied in-place, i.e. the changes are made by the mobile terminal on the existing image, thereby requiring little additional storage. Furthermore, since only the delta file needs to be loaded and since the delta file typically is considerably smaller than the new version, the loading time is reduced by the above method.

In one embodiment, the update process is initiated by an update agent running on the mobile terminal. The update agent controls the reception and verification of the delta file. Subsequently, the update agent causes the mobile terminal to be disconnected from the network and rebooted in a patch mode. In patch mode, the changes in the delta file are applied incrementally until the new memory image is complete.

Embodiments of the updating process will be described in greater detail below.

Fig. 2 schematically shows a block diagram of a mobile terminal according to an embodiment of the invention. The mobile terminal 201 comprises a communications block 210, a processing unit 211, and memory units 212, 213, and 214.

The communications block 210 comprises circuitry and/or devices allowing radio-based communication of data via a cellular communications network. Hence, for the purpose of the present description, the communications block 210 comprises receiver circuitry and transmitter circuitry for receiving and transmitting data signals. The communications block may further comprise circuitry for suitably processing the signals, e.g. modulating, coding, amplifying, etc., the signals by suitable techniques well known in the art of radio communications.

The mobile terminal further comprises a processing unit 211, e.g. a suitably programmed microprocessor. The processing unit is adapted to determine the version of the software stored in the mobile terminal, to calculate checksums of the stored software, and to generate an updated version of the software upon receipt of corresponding update instructions.

The memory unit 212 has stored thereon the software and/or other data in a predetermined version. For example, the memory 212 may comprise the firmware of the mobile terminal that implements the basic functions of the mobile terminal when loaded into and executed by the processing unit 210. The firmware may further comprise an operating system allowing application software to be executed. Accordingly, the memory 212 may further have stored thereon application software providing additional functionality. The memory 212 is addressed using a suitable address space, thereby allowing the processing unit to access selected parts of the memory. In some embodiments the memory 212 may be logically or physically divided in a plurality of memory blocks. For example, the memory 212 may comprise flash memory allowing data to be written in blocks of a predetermined size.

In the following, it will be assumed that the memory 212 is divided in a number of blocks of a predetermined size denoted $B_1$, $B_2$, $B_3$, ..., $B_N$. However, it is understood that any other addressing of the memory may be used, instead. It is further understood that the updating process described herein may be applied to the entire memory 212, e.g. if the entire image of the flash memory of a mobile phone is to be updated, or to only predetermined parts of the memory, e.g. if one or more software applications are to be updated.

The mobile terminal 201 further comprises a memory section 213 having stored thereon a list of reference checksums for use in the detection of possibly corrupted memory blocks. The generation and use of the checksums will be described in greater detail below. It is understood that the memory sections 212 and 213 may be part of the same physical memory, or they may be physically separate memories.

In a preferred embodiment, the mobile terminal further comprises a memory section 214 for securely storing a secret key for use in the integrity protection of the stored checksums as will be described in greater detail below. For example, the secret key may be stored in an internal memory, such as a ROM, an EPROM, or the like, that cannot be accessed from outside a predetermined circuit of the mobile terminal. In other embodiments, the mobile terminal may comprise a unique chip-ID, e.g. burnt into a circuit of the mobile terminal by means of electronic fuses. In yet other embodiments the secret key may be stored encrypted on a non-protected memory, e.g. a flash memory.

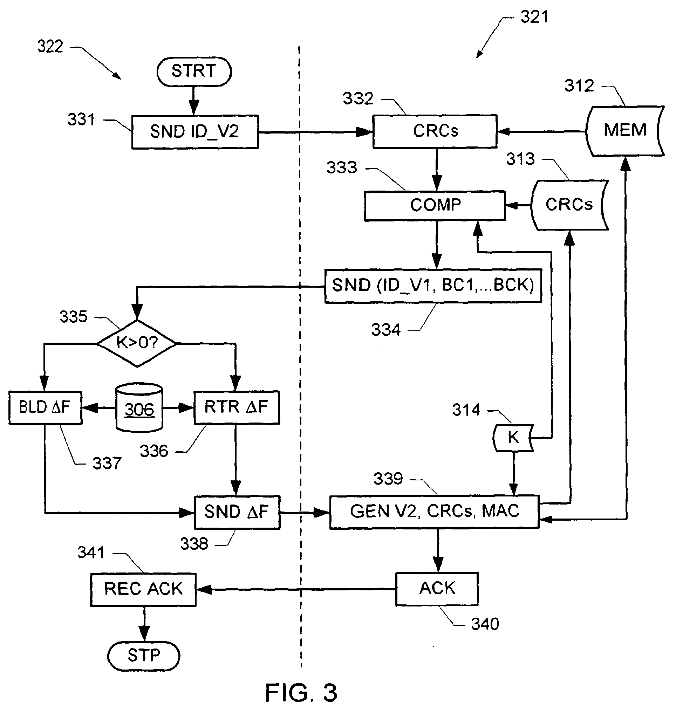

Fig. 3 shows a flow diagram of an embodiment of a software update process. The flow diagram illustrates on its right side, generally designated 321, the steps performed by the mobile terminal and, on the left side generally designated 322, the steps performed by the software updating system.

In the flow diagram of fig. 3, it is assumed that the software updating system initiates the update process. Accordingly, in the initial step 331, the software updating system sends a message to the mobile terminal informing the mobile terminal that a new version of the software is available, e.g. by sending an identification of the new version, designated ID_V2. In step 332, in response to the message received from the software updating system, the mobile terminal calculates the checksums of the content of the corresponding memory blocks of the memory 312, or of a part of the memory comprising the software to be updated. !n step 333, the mobile terminal compares the calculated checksums with a list of reference checksums stored in memory section 313 of the mobile terminal. The reference checksums are the checksums of the corresponding memory blocks for the authentic memory content corresponding to the base version currently installed in the mobile terminal. An example of how the checksums are stored and calculated will now be described with reference to fig. 4.

Fig. 4 schematically illustrates the calculation and integrity protection of checksums. Fig. 4 schematically shows the memory 413 of a mobile device that is to be updated. The memory is divided into a set of N blocks denoted $B_1$, $B_2$, ..., $B_N$. According to this embodiment, the mobile terminal further comprises a memory section 413 having stored therein N+1 checksums corresponding to the authentic memory image of the N memory blocks of memory 413. N of the N+1 checksums are computed over respective ones of the N memory blocks such that there is stored a reference checksum for each of the memory blocks $B_1$, ... , $B_N$. The checksums for the individual memory blocks are denoted $CRC_1$, $CRC_2$, ..., $CRC_N$. Preferably each of the checksums is computed from the corresponding memory block using a hash function h according to $CRC_i = h(B_i)$. Preferably, the hash function is a one-way hash function, more preferably a cryptographically strong one-way hash function, in order to increase the security against tampering with the update system. The term "cryptographically strong one-way hash function" is intended to comprise any function $M \rightarrow h(M) = m$ that maps messages $M$ from a message space to a smaller hash space such that it is computationally infeasible for anyone to find two messages $M$ and $M'$ such that $h(M) = h(M')$ or, given an arbitrary $m$, to find any message $M$ such that $h(M) = m$. Examples of suitable hash functions include SHA-1 and MD5.

The remaining one of the N+1 checksums, denoted $CRC_T$ is calculated over the entire memory 412, i.e. $CRC_T = h(B_1, B_2, ..., B_N)$. In one embodiment, this total checksum is used to perform an initial check including calculating and comparing the total checksum. If the total checksum is successfully verified, the system assumes that there are no corrupted memory blocks. A calculation and comparison of the individual checksums is only performed, if the total checksum fails, in order to identify which blocks are corrupted.

In one embodiment, the list of checksums of the authentic memory content is stored in the mobile terminal using a mechanism for integrity protection allowing the detection of any tampering with the list of checksums. For example, the list of checksums may be protected by a message authentication code (MAC) using a secret key k stored in a secure memory section 414 of the mobile terminal. An example of a message authentication code is HMAC. Hence, in one embodiment, a tag value $t = MAC_k(CRC_1, ..., CRC_N, CRC_T)$ is calculated from the checksums using a MAC algorithm and the secret k. The calculated tag value is appended to the list of reference checksums and stored in the memory section 413, as indicated by reference numeral 415. During the update process, the mobile terminal re-calculates the tag value using the key k and compares the calculated value with the tag value 415 stored in memory.

In order to provide a sufficiently high security of the MAC-based integrity protection, it is preferred that the key k is stored in a memory 414 in such a way that it can be accessed/read by a trusted process/user only, e.g. as described in connection with fig. 2 above.

Again referring to fig. 3, in step 333, the mobile terminal identifies memory blocks, if any, for which the calculated checksum differs from the reference checksum stored by the mobile terminal.

In step 334, the mobile device sends an identification of the software version currently installed, designated ID_V1, and the list of corrupted memory blocks to the software updating system. In the example of fig. 3, this list comprises block identifiers BC1,...,BCK, $0 \leq K \leq N$.

Upon receipt of this information, the software updating system generates a suitable delta file. In the embodiment of fig. 3, in step 335 the software updating system determines whether the mobile terminal has identified any corrupted blocks. If this is not the case, i.e. if the memory contents have been verified by the mobile terminal as being the authentic base version, the software updating system does not need to generate a dedicated delta file. In this case a standard delta file comprising differential update instructions for the update from an authentic base version to the desired updated version may be pre-generated and stored in the version database 306 of the software updating system. Hence, if no corrupted blocks have been identified, the process continues at step 336, where the software updating system retrieves the corresponding standard delta file from the database 306 and continues at step 338.

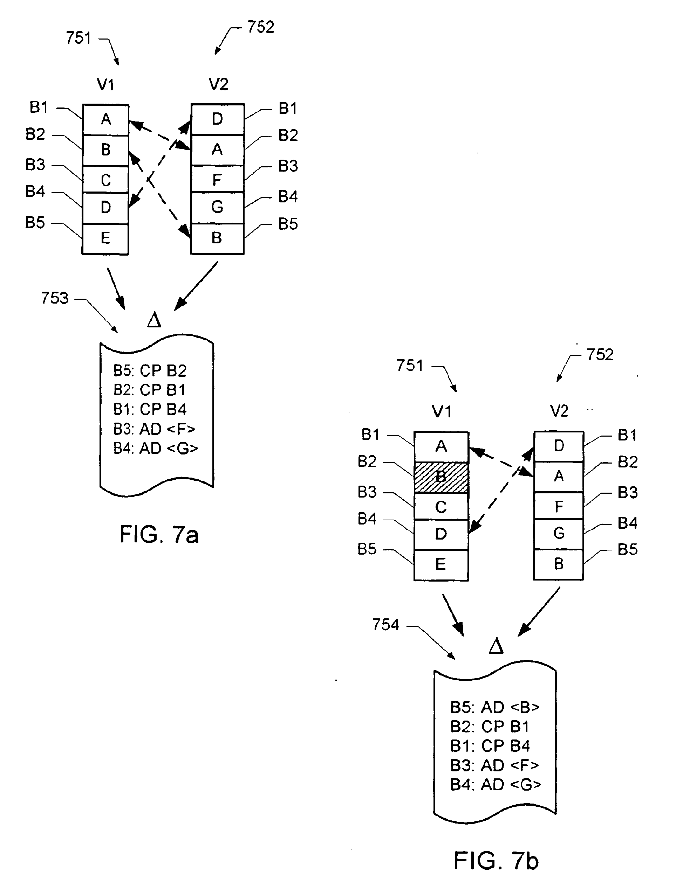

If one or more corrupted blocks have been identified, the process continues at step 337, where the software updating system generates a dedicated delta file and continues at step 338. As described in greater detail herein, the dedicated delta file comprises update instructions that cause the mobile terminal to generate an authentic updated version. In particular, the update instructions cause the corrupted blocks to be excluded from reuse during the generation of the updated version. Hence, the software updating system retrieves the base version and the new version from the version database 306 and generates the delta file from these two versions and from the information about corrupted memory blocks. An example of the generation of a dedicated delta file in the presence of corrupted blocks will be described in connection with figs. 7a-b.

In step 338, the software updating system sends the generated delta file to the mobile terminal. in step 339, the mobile terminal generates the updated version of the software from the content of the memory 312 and the instructions received in the delta file. The mobile terminal stores the updated version in the memory 312.

In the embodiment of fig. 3, the reference checksums stored in memory 313 are also updated in order to reflect the updated memory content. Hence, in step 339, the mobile terminal further calculates and stores updated reference checksums and, if integrity protection is applied, an updated MAC value using the key k. It is understood that, in an alternative embodiment, the updated reference checksums and MAC value may be calculated by the software updating system and transmitted to the mobile terminal instead.

It is further understood that, in some embodiments, the mobile terminal performs a verification of the received delta file prior to applying the received delta file, e.g. by applying an integrity protection of the received delta file and/or authentication of the software updating system.

Optionally, upon successful completion of the update, in step 340, the mobile terminal sends an acknowledgment of the successful receipt to the software updating system. The receipt of this acknowledgment by the software updating system in step 341 completes the update process.

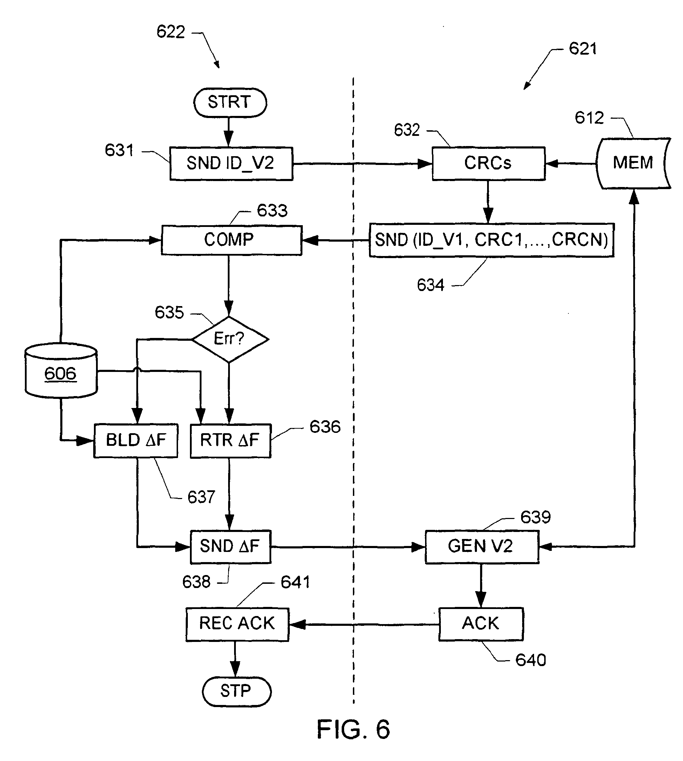

In the following, a second embodiment of the update process will be described with reference to figs. 5 and 6, in which the detection of corrupted blocks is performed cooperatively by the mobile terminal and the software updating system.

Fig. 5 schematically shows a block diagram of a mobile terminal according to another embodiment of the invention. The mobile terminal 501 comprises a communications block 510, a processing unit 511, and a memory unit 512, e.g. as described in connection with fig. 2. The mobile terminal 501 differs from the mobile terminal of fig. 2 in that the mobile terminal 501 does not comprise memory sections for storing reference checksums or a key parameter for the integrity protection of the reference checksums.

An update process that can be used in connection with the mobile terminal of fig. 5 will now be described with reference to fig. 6. The process of fig. 6 is similar to the process of fig. 3, except that the mobile terminal in the process of fig. 6 sends the calculated checksums to the software updating system which performs the comparison of the checksums with reference checksums, thereby reducing the storage requirements and the required computational resources at the mobile terminal.

The flow diagram illustrates on its right side, generally designated 621, the steps performed by the mobile terminal and, on the left side generally designated 622, the steps performed by the software updating system.

In the flow diagram of fig. 6, it is assumed that the software updating system initiates the update process. Accordingly, in the initial step 631, the software updating system sends a message to the mobile terminal informing the mobile terminal that a new version of the software is available. In step 632, in response to the message received from the software updating system, the mobile terminal calculates the checksums of the content of the corresponding memory blocks of the memory 612 or part of the memory comprising the software to be updated, as was described in greater detail above.

In step 634, the mobile terminal sends an identification of the software version currently installed and the list of calculated checksums, designated CRC1,..., CRCN, to the software updating system.

Upon receipt of this information, in step 633, the software updating system compares the received checksums with a list of reference checksums stored in the version database 606. Alternatively, the reference checksums may be stored at an alternative location, or the software updating system may recalculate the checksums from the authentic base version stored in the version database 606. An embodiment of the structure of the reference checksums and a method of calculating them has been described in greater detail above.

It is understood that, optionally, the mobile terminal may integrity protect the checksums prior to sending them to the software updating system, e.g. by appending a MAC tag as described above, and/or cryptographically protect them in another suitable way.

In step 635 the software updating system determines whether the comparison of step 633 has revealed any corrupted memory blocks. If no corrupted blocks have been identified, the process continues at step 636, where the software updating system retrieves the corresponding standard delta file from the database 606 and continues at step 638.

If one or more corrupted blocks have been identified, the process continues at step 637, where the software updating system generates a dedicated delta file and continues at step 638.

In step 638, the software updating system sends the generated delta file to the mobile terminal. In step 639, the mobile terminal generates the updated version of the software from the content of the memory 612 and the instructions received in the delta file. The mobile terminal stores the updated version in the memory 612.

Again, it is understood that, in some embodiments, the mobile terminal performs a verification of the received delta file prior to applying the received delta file, e.g. by applying an integrity protection of the received delta file and/or authentication of the software updating system.

Optionally, upon successful completion of the update, in step 640, the mobile terminal sends an acknowledgment of the successful receipt to the software updating system. The receipt of this acknowledgment by the software updating system in step 641 completes the update process.

In a modification of the process of fig. 6, the mobile terminal initially calculates a total checksum of the entire memory to be updated and transmits the total checksum to the software updating server for verification.

If the total checksum is verified successfully, the software updating system proceeds by sending a standard update file to the mobile terminal. If the verification of the total checksum fails indicating the presence of at least one corrupted block, the software updating system requests the mobile terminal to send a list of checksums for the individual blocks, in order to identify which block(s) is/are corrupted.

Figs. 7a-b schematically illustrate an embodiment of the generation of a delta file in the absence and presence of corrupted memory blocks, respectively.

As described above, a delta file comprises differential update instructions for generating an updated version of a file or other memory content from a baseline version of that file. An embodiment of the delta file generation procedure makes a byte-level comparison of the baseline version and the updated version. In the following, the baseline version will be denoted V1 and the updated version V2.

Several delta file generation algorithms are known as such in the art, e.g. the algorithm disclosed in US 6, 018, 747. Typically, such algorithms scan both versions V1 and V2 and try to find as many similarities as possible. The positions and sizes of the common data sections are recorded and stored. The delta file itself typically consists of a number of commands, e.g. add commands and copy commands. The copy command identifies data that should be reused from version V1, while the add command represents data that is introduced, i.e. added, in version V2.

In the simple example of figs. 7a-b, it is assumed that a baseline version of a file or memory area, generally designated 751, comprises five blocks of data designated B1, B2, B3, B4, and B5, respectively. The data stored in these blocks is denoted by A, B, C, D, and E, respectively. The updated version of the file, generally designated 752, also comprises five blocks designated B1, B2, B3, B4, and B5, respectively. However, the content of the various blocks differs from the corresponding content of the baseline version. In the updated version, the five blocks comprise data denoted D, A, F, G, and B, respectively. Here, same letters correspond to identical data, and different letters indicate different data.

The dashed arrows in figs. 7a-b mark blocks that are common to the two versions. Hence, in the example of figs. 7a-b, updated block B1 comprises the same data as block B4 in the original version, updated block B2 comprises the same data as block B1 in the original version, and updated block B5 comprises the same data as block B2 in the original version.

During the updating process, the version V1 is transformed into version V2 by applying the commands in a delta file. An example of a delta file comprises a description on how to construct version V2 from version V1 using block-by-block copy and add operations. In the example of fig. 7a, the delta file 753 comprises five commands:

1. B5: CP B2
2. B2: CP B1
3. B1: CP B4
4. B3: AD <F>
5. B4: AD <G>

Each command identifies a block of the updated version and a command as to how to generate that block. In this example, the first command causes the block B5 to be generated by copying the original content of B2 into block B5. Similarly, the second and third commands cause blocks B2 and B1 to be generated as copies of original blocks B1 and B4, respectively. The fourth and fifth commands are add commands that specify that data F is to be added into block B3, and that data G is to be added into block B4, respectively. It is noted that the order of the above sequence of commands is chosen such as to avoid read/write conflicts where a block is written to before the original content of the block is to be read.

The above update procedure relies on the fact that the version V1 image used by the delta generation algorithm is identical to the version V1 image on the mobile terminal. In a situation where this is not the case, e.g. the target node image has been tampered with or is infected with some virus, there is a big risk that the update procedure will fail and render a completely non-functional target node. To avoid this, the status of the target image is checked and a report is submitted to the software updating system before the delta file is generated. In case some non-identical blocks are found these are excluded from the delta file generation. This means that the delta file may be larger than the standard delta file, since an add command containing a fresh copy of the corrupted block may be used instead of copy command.

Fig. 7b illustrates an example of a delta file generation with a corrupted block. In fig. 7b the same scenario as in fig. 7a is considered, except that in fig. 7b it is assumed that block B2 has been detected to be corrupted.

Consequently, in the modified delta file generation, the corrupted block B2 is excluded when the versions are compared for similarities, and the corrupted block B2 is not reused for the generation of updated block B5. Therefore, in this case, the resulting delta file 754 differs from the previous delta file in that the delta file 754 comprises a different command for updating block B5, which now reads

1. B5: AD <B>.

Hence, instead of a copy command the authentic updated data B is now explicitly added to block B5. It is further noted that, for the purpose of the present description, the order of commands has been maintained. However, in the example of fig. 7b, the above step B5: AD <B> may also be performed as the last step, i.e. in line with the sequence of blocks, since the command for modifying block B5 no longer depends on the content of one of the other blocks. Hence, in another embodiment, the sequence of commands would be (2,3,4,5,1).

It is understood that the scenario of figs. 7a-b merely serves as a simple example in order to illustrate the effect of corrupted images on the update process.

In particular, it is noted that the updating steps may involve a different granularity than block-by-block update. The copy and add commands may involve smaller and/or larger memory sections. In particular, the granularity of the add and copy commands is not limited to the block size of the blocks that are detected to be corrupted or not. The add and copy commands may even involve memory sections of varying size. For example, each copy or add command may indicate a start address and a length of the data area that is to be copied or added.

It is further understood, that the delta file may comprise additional and/or alternative commands, e.g. a delete command, or the like.

It is further understood that the delta file may specify an order of update steps that is different from the sequence of memory sections in the updated file, e.g. in order to avoid conflicting update steps, e.g. that a memory block is updated in a first step and the original content of that memory block is to be reused in a subsequent update step.

It is further understood that, in an alternative embodiment, the additional new data may be sent in a separate file, such that a command file and a data file are transmitted.

Although preferred embodiments of the present invention have been described and shown, the invention is not restricted to them, but may also be embodied in other ways within the scope of the subject matter defined in the following claims. For example, even though the invention was described mainly in connection with the update of software, a skilled person will appreciate that the invention may also be applied to the update of other data stored in a mobile terminal.

According to another possible modification of the update process described herein, the software updating system may, if corrupted memory blocks are detected, perform alternative or additional steps, e.g. the software updating system may deny a software update due to security reasons, e.g. if memory blocks comprising license-related data are corrupted.

According to yet another possible modification of the update process described herein, the update process is initiated by the mobile terminal instead of the software updating system. For example, the mobile terminal may send a query for available updates to the software updating system. In some embodiments the query may include version information of the currently installed software. For example, the mobile terminal may send such a query at regular time intervals, in response to a user command, in response to another event, and/or the like. In some embodiments, the mobile terminal may check its memory, e.g. at regular time intervals or triggered by another event such as a user command. For example, the memory check may comprise a calculation of checksums and a comparison of the checksums with reference checksums stored by the mobile terminal as described above. If the memory check reveals any corrupted blocks, the mobile terminal may request an unconditional software update, i.e. irrespective of whether a new version is available, thereby allowing a repair of the corrupted memory content. In other embodiments, the mobile terminal may regularly calculate the checksums and send them to the software updating system where there are verified as described above. If corrupt memory blocks are found or a new software version is available, a software update is initiated by the updating system.

According to yet another possible modification of the update process described herein, the software updating system pre-calculates a number of alternative delta files, e.g. a set of delta files, each corresponding to a single corrupted block. The pre-calculated alternative delta files are stored and may be retrieved during the actual updating process, thereby reducing the processing necessary during the actual update process. Alternatively or additionally, the software updating system may cache or store the delta files computed during the update process, thereby making them available for future update situations where the same corrupted blocks are identified. This may be particularly advantageous, in situations where the corrupted memory is caused by a virus or the like, since it may be expected that several mobile terminals will have corresponding corrupted blocks.

The invention can be implemented by means of hardware comprising several distinct elements, and by means of a suitably programmed computer. In the device claims enumerating several means, several of these means can be embodied by one and the same item of hardware, e.g. a suitably programmed microprocessor or computer, and/or one or more communications interfaces as described herein. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A method of differentially updating data stored in a memory of a mobile terminal, the memory being divided in a plurality of memory blocks, to an updated data version, the method comprising the step of

   - Identifying among the data in the mobile terminal those memory blocks, if any, that are corrupt;

   and **characterised in** the further steps of:

- generating differential update instructions based on a first data version corresponding to an identification of the version of the data currently stored on the mobile terminal and the updated data version and on information about the identified corrupted memory blocks, the generating comprising

    - comparing the first data version and the updated data version for identifying memory block similarities;
    - generating copy commands for memory blocks that are identified to be identical;
    - generating add commands for memory blocks that are present in the updated data version but not in the first data version, wherein for memory blocks that are identified to be identical and that correspond to corrupt memory blocks, an add command instead of a copy command is generated for inserting an authentic updated memory block;

    - loading the differential update instructions into the mobile terminal; and
    - generating the updated data version by the mobile terminal from the currently stored data and the loaded differential update instructions.

2. A method according to claim 1, wherein the differential update instructions include update data; and wherein generating the updated data version comprises replacing data stored in predetermined one or more memory blocks by said update data.

3. A method according to claim 2, wherein the update data Include repaired one or more memory blocks of data consistent with the updated data version, the repaired one or more memory blocks of data corresponding to the identified corrupted one or more memory blocks of data.

4. A method according to any one of claims 1 through 3, wherein generating the differential update instructions comprises generating instructions causing the mobile terminal to generate the updated data version from the stored data excluding the identified corrupted one or more memory blocks, if any, and from the differential update instructions.

5. A method according to any one of claims 1 through 3, wherein generating the differential update instructions Is performed by a remote data processing system.

6. A method according to claim 5, wherein the mobile terminal and the remote data processing system communicate via a wireless communications link.

7. A method according to claim 5 or 6, wherein the mobile terminal and the remote data processing system communicate via an Internet Protocol.

8. A method according to any one of claims 5 through 7, wherein the identification is performed by the mobile terminal and the identification further comprises transmitting information about the identified corrupted one or more memory blocks from the mobile terminal to the remote data processing system.

9. A method according to any one of claims 5 through 7, wherein the method further comprises transmitting information about the stored data from the mobile terminal to the remote data processing system and wherein the identification is performed by the remote data processing system based on the transmitted information.

10. A method according to any one of claims 1 through 9, wherein the identification comprises

    - calculating a number of checksums by the mobile terminal, wherein each checksum corresponds to a corresponding memory block of data stored in the mobile terminal; and
    - comparing the calculated checksums with a number of reference checksums to identify any corrupted memory block of data.

11. A method according to claim 10 when dependent on claim 8, wherein the reference checksums are stored In the mobile terminal and wherein the comparing is performed by the mobile terminal.

12. A method according to daim 11, wherein the reference checksums stored in the mobile terminal are integrity protected by a message authentication code.

13. A method according to claim 10 when dependent on claim 9, wherein the reference checksums are stored on the remote data processing system; wherein the transmitted information comprises the calculated checksums; and wherein the identification further comprises comparing the transmitted calculated checksums by the remote data processing system with the number of reference checksums stored on the remote data processing system.

14. A method according to any one of claims 10 through 13, wherein the calculating comprises calculating the checksums as a cryptographically strong one-way hash function of the corresponding memory block of the stored data.

15. A mobile terminal comprising

- a data memory for storing data, the data memory being divided in a plurality of memory blocks;
- communications means adapted to receive from a data processing system differential update instructions for updating data stored in the data memory to an updated data version;
- processing means adapted to generate the updated data version from the currently stored data and from the received differential update instructions;

**characterised in that** the processing means is further adapted to generate information from the stored data indicative of the presence or absence of one or more corrupted memory blocks and to communicate the generated information via the communications means to the data processing system for generating the differential update instructions based on a first data version corresponding to an identification of the version of the data currently stored on the mobile terminal and the updated data version and on the generated information about corrupted memory blocks by

- comparing the first data version and the updated data version for identifying memory block similarities;
- generating copy commands for memory blocks that are identified to be identical;
- generating add commands for memory blocks that are present in the updated data version but not in the first data version, wherein for memory blocks that are identified to be identical and that correspond to corrupt memory blocks, an add command instead of a copy command is generated for inserting an authentic updated memory block.

16. A data processing system for facilitating differentially updating data stored in a memory of a mobile terminal, the memory being divided in a plurality of memory blocks, to an updated data version, the data processing system comprising means for loading differential update instructions into the mobile terminal, the differential update instructions causing the mobile terminal to generate the updated data version from the currently stored data and the loaded differential update instructions;

**characterised in that** the data processing system further comprises

- means for receiving information from the mobile terminal indicative of the presence or absence of one or more corrupted memory blocks; and
- processing means adapted to generate the differential update instructions from a first data version corresponding to an identification of the version of the data currently stored on the mobile terminal and the updated data versions and from the received information by

- comparing the first data version and the updated data version for identifying memory block similarities;
- generating copy commands for memory blocks that are identified to be identical;
- generating add commands for memory blocks that are present in the updated data version but not in the first data version, wherein for memory blocks that are identified to be identical and that correspond to corrupt memory blocks, an add command instead of a copy command is generated for inserting an authentic updated memory block.

17. A computer program comprising program code means adapted to cause a mobile terminal to differentially update data stored in a memory of the mobile terminal, the memory being divided in a plurality of memory blocks, to an updated data version **characterised by** performing the following steps, when the program is executed on the mobile terminal:

- generating information from the stored data indicative of the presence or absence of one or more corrupted memory blocks;
- communicating the generated information to a data processing system for generating differential update instructions based on a first data version corresponding to an identification of the version of the data currently stored on the mobile terminal and the updated data version and on the generated information about corrupted memory blocks by

- comparing the first data version and the updated data version for identifying memory block similarities;
- generating copy commands for memory blocks that are identified to be identical;
- generating add commands for memory blocks that are present in the updated data version but not in the first data version, wherein for memory blocks that are identified to be identical and that correspond to corrupt memory blocks, an add command instead of a copy command is generated for inserting an authentic updated memory block;

- loading the differential update instructions into the mobile terminal; and
- generating the updated data version by the mobile terminal from the currently stored data and the loaded differential update instructions, including repairing any such detected corrupted memory blocks.

18. A computer program comprising program code means adapted to cause a data processing system to facilitate differentially updating data stored in a memory of a mobile terminal, the memory being divided in a plurality of memory blocks, to an updated data version **characterised by** performing the following steps, when the program is executed on the data processing system:

- generating differential update instructions from a first data version corresponding to an identification of the version of the data currently stored on the mobile terminal and the updated data versions and from information received from the mobile terminal, wherein the received information is indicative of the presence or absence of one or more corrupted memory blocks by;

- comparing the first data version and the updated data version for identifying memory block similarities;
- generating copy commands for memory blocks that are identified to be identical;
- generating add commands for memory blocks that are present in the updated data version but not in the first data version, wherein for memory blocks that are identified to be identical and that correspond to corrupt memory blocks, an add command instead of a copy command is generated for inserting an authentic updated memory block and

- loading the generated differential update instructions into the mobile terminal, the differential update instructions causing the mobile terminal to generate the updated data version from the currently stored data and the loaded differential update instructions.

19. A computer-readable medium comprising a computer program according to claim 17 or 18.

**Patentansprüche**

1. Verfahren zur differenziellen Aktualisierung von Daten, die in einem Speicher eines mobilen Endgeräts gespeichert sind, wobei der Speicher in eine Mehrzahl von Speicherblöcken unterteilt ist, auf eine aktualisierte Datenversion, wobei das Verfahren den folgenden Schritt umfasst:

- Identifizieren unter den Daten im mobilen Endgerät jener Speicherblöcke, soweit vorhanden, die beschädigt sind;

und **gekennzeichnet durch** die folgenden weiteren Schritte:

- Erzeugen von Anweisungen zur differenziellen Aktualisierung basierend auf einer ersten Datenversion entsprechend einer Identifizierung der Version der gegenwärtig auf dem mobilen Endgerät gespeicherten Daten und der aktualisierten Datenversion und auf Informationen über die identifizierten beschädigten Speicherblökke, wobei das Erzeugen umfasst:

- Vergleichen der ersten Datenversion und der aktualisierten Datenversion zum Identifizieren von Speicherblockähnlichkeiten;
- Erzeugen von Kopierbefehlen für Speicherblöcke, die als identisch identifiziert werden;
- Erzeugen von Hinzufügebefehlen für Speicherblöcke, die in der aktualisierten Datenversion, aber nicht in der ersten Datenversion vorhanden sind, wobei für Speicherblöcke, die als identisch identifiziert werden und die beschädigten Speicherblöcken entsprechen, ein Hinzufügebefehl anstelle eines Kopierbefehls zum Einfügen eines authentischen aktualisierten Speicherblocks erzeugt wird;

- Laden der Anweisungen zur differenziellen Aktualisierung in das mobile Endgerät; und
- Erzeugen der aktualisierten Datenversion durch das mobile Endgerät aus den gegenwärtig gespeicherten Daten und den geladenen Anweisungen zur differenziellen Aktualisierung.

2. Verfahren nach Anspruch 1, wobei die Anweisungen zur differenziellen Aktualisierung Aktualisierungsdaten umfassen; und wobei das Erzeugen der aktualisierten Datenversion ein Ersetzen von Daten, die in einem oder mehreren vorbestimmten Speicherblöcken gespeichert sind, durch die Aktualisierungsdaten umfasst.

3. Verfahren nach Anspruch 2, wobei die Aktualisierungsdaten einen oder mehrere reparierte Speicherblöcke von Daten umfassen, die mit der aktualisierten Datenversion übereinstimmen, wobei der eine oder die mehreren reparierten Speicherblöcke von Daten dem einen oder den mehreren identifizierten beschädigten Datenblöcken entsprechen.

4. Verfahren nach einem der Ansprüche 1 bis 3, wobei das Erzeugen der Anweisungen zur differenziellen Aktualisierung ein Erzeugen von Anweisungen umfasst, welche das mobile Endgerät veranlassen, die aktualisierte Datenversion aus den gespeicherten Daten unter Ausschluss des einen oder der mehreren identifizierten beschädigten Speicherblöcke, soweit vorhanden, und aus den Anweisungen zur differenziellen Aktualisierung zu erzeugen.

5. Verfahren nach einem der Ansprüche 1 bis 3, wobei das Erzeugen der Anweisungen zur differenziellen Aktualisierung durch ein Datenfernverarbeitungssystem durchgeführt wird.

6. Verfahren nach Anspruch 5, wobei das mobile Endgerät und das Datenfernverarbeitungssystem über eine drahtlose Kommunikationsverbindung kommunizieren.

7. Verfahren nach Anspruch 5, wobei das mobile Endgerät und das Datenfernverarbeitungssystem über ein Internetprotokoll kommunizieren.

8. Verfahren nach einem der Ansprüche 5 bis 7, wobei die Identifizierung durch das mobile Endgerät durchgeführt wird, und die Identifizierung ferner ein Senden von Informationen über den einen oder die mehreren identifizierten beschädigten Speicherblöcke vom mobilen Endgerät an das Datenfernverarbeitungssystem umfasst.

9. Verfahren nach einem der Ansprüche 5 bis 7, wobei das Verfahren ferner ein Senden von Informationen über die gespeicherten Daten vom mobilen Endgerät an das Datenfernverarbeitungssystem umfasst, und wobei die Identifizierung durch das Datenfernverarbeitungssystem basierend auf den gesendeten Informationen durchgeführt wird.

10. Verfahren nach einem der Ansprüche 1 bis 9, wobei die Identifizierung umfasst:

   - Berechnen einer Anzahl von Prüfsummen durch das mobile Endgerät, wobei jede Prüfsumme einem entsprechenden Speicherblock von Daten entspricht, die im mobilen Endgerät gespeichert sind; und
   - Vergleichen der berechneten Prüfsummen mit einer Anzahl von Referenzprüfsummen, um jeglichen beschädigten Speicherblock von Daten zu identifizieren.

11. Verfahren nach Anspruch 10, wenn von Anspruch 8 abhängig, wobei die Referenzprüfsummen im mobilen Endgerät gespeichert werden, und wobei das Vergleichen durch das mobile Endgerät durchgeführt wird.

12. Verfahren nach Anspruch 11, wobei die im mobilen Endgerät gespeicherten Referenzprüfsummen durch einen Nachrichtenauthentifizierungscode integritätsgeschützt werden.

13. Verfahren nach Anspruch 10, wenn von Anspruch 9 abhängig, wobei die Referenzprüfsummen auf dem Datenfernverarbeitungssystem gespeichert werden; wobei die gesendeten Informationen die berechneten Prüfsummen umfassen, und wobei die Identifizierung ferner ein Vergleichen der gesendete berechneten Prüfsummen durch das Datenfernverarbeitungssystem mit der Anzahl von auf dem Datenfernverarbeitungssystem gespeicherten Prüfsummen umfasst.

14. Verfahren nach einem der Ansprüche 10 bis 13, wobei das Berechnen ein Berechnen der Prüfsummen als eine kryptografisch starke Einweg-Hashfunktion des entsprechenden Speicherblocks der gespeicherten Daten umfasst.

15. Mobiles Endgerät, umfassend:

   - einen Datenspeicher zum Speichern von Daten, wobei der Datenspeicher in eine Mehrzahl von Speicherblöcken unterteilt ist;
   - Kommunikationsmittel, die so ausgelegt sind, dass sie von einem Datenverarbeitungssystem Anweisungen zur differenziellen Aktualisierung zum Aktualisieren von im Datenspeicher gespeicherten Daten auf eine aktualisierte Datenversion empfangen;
   - Verarbeitungsmittel, die so ausgelegt sind, dass sie die aktualisierte Datenversion aus den gegenwärtig gespeicherten Daten und aus den empfangenen Anweisungen zur differenziellen Aktualisierung erzeugen;

   **dadurch gekennzeichnet, dass** die Verarbeitungsmittel ferner so ausgelegt sind, dass sie Informationen aus den gespeicherten Daten erzeugen, welche das Vorhandensein oder Nichtvorhandensein eines oder mehrerer beschädigter Speicherblöcke anzeigen, und die erzeugten Informationen über die Kommunikationsmittel dem Datenverarbeitungssystem kommunizieren, um die Anweisungen zur differenziellen Aktualisierung basierend auf einer ersten Datenversion entsprechend einer Identifizierung der Version der gegenwärtig auf dem mobilen Endgerät gespeicherten Daten und der aktualisierten Datenversion und auf den erzeugten Informationen über beschädigte Speicherblöcke zu erzeugen durch:

   - Vergleichen der ersten Datenversion und der aktualisierten Datenversion zum Identifizieren von Speicherblockähnlichkeiten;
   - Erzeugen von Kopierbefehlen für Speicherblöcke, die als identisch identifiziert werden;
   - Erzeugen von Hinzufügebefehlen für Speicherblöcke, die in der aktualisierten Datenversion, aber nicht in der ersten Datenversion vorhanden sind,

wobei für Speicherblöcke, die als identisch identifiziert werden und die beschädigten Speicherblöcken entsprechen, ein Hinzufügebefehl anstelle eines Kopierbefehls zum Einfügen eines authentischen aktualisierten Speicherblocks erzeugt wird.

16. Datenverarbeitungssystem zum Ermöglichen von differenziellem Aktualisieren von Daten, die in einem Speicher eines mobilen Endgeräts gespeichert sind, wobei der Speicher in eine Mehrzahl von Speicherblöcken unterteilt ist, auf eine aktualisierte Datenversion, wobei das Datenverarbeitungssystem Mittel zum Laden von Anweisungen zur differenziellen Aktualisierung in das mobile Endgerät umfasst, und die Anweisungen zur differenziellen Aktualisierung das mobile Endgerät veranlassen, die aktualisierte Datenversion aus den gegenwärtig gespeicherten Daten und den geladenen Anweisungen zur differenziellen Aktualisierung zu erzeugen;

**dadurch gekennzeichnet, dass** das Datenverarbeitungssystem ferner umfasst:

- Mittel zum Empfangen von Informationen vom mobilen Endgerät, welche das Vorhandensein oder Nichtvorhandensein eines oder mehrerer beschädigter Speicherblöcke anzeigen; und
- Verarbeitungsmittel, die so ausgelegt sind, dass sie die Anweisungen zur differenziellen Aktualisierung aus einer ersten Datenversion entsprechend einer Identifizierung der Version der gegenwärtig auf dem mobilen Endgerät gespeicherten Daten und der aktualisierten Datenversionen und aus den empfangenen Informationen erzeugen durch:
- Vergleichen der ersten Datenversion und der aktualisierten Datenversion zum Identifizieren von Speicherblockähnlichkeiten erzeugen;
- Erzeugen von Kopierbefehlen für Speicherblöcke, die als identisch identifiziert werden;
- Erzeugen von Hinzufügebefehlen für Speicherblöcke, die in der aktualisierten Datenversion, aber nicht in der ersten Datenversion vorhanden sind,

wobei für Speicherblöcke, die als identisch identifiziert werden und die beschädigten Speicherblöcken entsprechen, ein Hinzufügebefehl anstelle eines Kopierbefehls zum Einfügen eines authentischen aktualisierten Speicherblocks erzeugt wird.

17. Computerprogramm, umfassend Programmcodemittel, die so ausgelegt sind, dass sie ein mobiles Endgerät veranlassen, in einem Speicher des mobilen Endgeräts gespeicherte Daten differenziell auf eine aktualisierte Datenversion zu aktualisieren, wobei der Speicher in eine Mehrzahl von Speicherblöcken unterteilt ist, **gekennzeichnet durch** Ausführen der folgenden Schritte, wenn das Programm auf dem mobilen Endgerät ausgeführt wird:

- Erzeugen von Informationen aus den gespeicherten Daten, welche das Vorhandensein oder Nichtvorhandensein eines oder mehrerer beschädigter Speicherblöcke anzeigen;
- Kommunizieren der erzeugten Informationen einem Datenverarbeitungssystem zum Erzeugen von Anweisungen zur differenziellen Aktualisierung basierend auf einer ersten Datenversion entsprechend einer Identifizierung der Version der gegenwärtig auf dem mobilen Endgerät gespeicherten Daten und der aktualisierten Datenversion und auf den erzeugten Informationen über beschädigte Speicherblöcke **durch**:

- Vergleichen der ersten Datenversion und der aktualisierten Datenversion zum Identifizieren von Speicherblockähnlichkeiten;

- Erzeugen von Kopierbefehlen für Speicherblöcke, die als identisch identifiziert werden;

- Erzeugen von Hinzufügebefehlen für Speicherblöcke, die in der aktualisierten Datenversion, aber nicht in der ersten Datenversion vorhanden sind,

wobei für Speicherblöcke, die als identisch identifiziert werden und die beschädigten Speicherblöcken entsprechen, ein Hinzufügebefehl anstelle eines Kopierbefehls zum Einfügen eines authentischen aktualisierten Speicherblocks erzeugt wird;

- Laden der Anweisungen zur differenziellen Aktualisierung in das mobile Endgerät; und
- Erzeugen der aktualisierten Datenversion **durch** das mobile Endgerät aus den gegenwärtig gespeicherten Daten und den geladenen Anweisungen zur differenziellen Aktualisierung, umfassend ein Reparieren jeglicher solcher erkannten beschädigten Speicherblöcke.

18. Computerprogramm, umfassend Programmcodemittel, die so ausgelegt sind, dass sie ein Datenverarbeitungssystem veranlassen, in einem Speicher eines mobilen Endgeräts gespeicherte Daten differenziell auf eine aktualisierte Datenversion zu aktualisieren, wobei der Speicher in eine Mehrzahl von Speicherblöcken unterteilt ist, **gekennzeichnet durch** Ausführen der folgenden Schritte, wenn das Programm auf dem Datenverarbeitungssystem ausgeführt wird:

- Erzeugen von Anweisungen zur differenziellen Aktualisierung aus einer ersten Datenversion entsprechend einer Identifizierung der Version der gegenwärtig auf dem mobilen Endgerät gespeicherten Daten und den aktualisierten Datenversionen und aus vom mobilen Endgerät empfangenen Informationen, wobei die empfangenen Informationen das Vorhandensein oder Nichtvorhandensein eines oder mehrerer beschädigter Speicherblöcke anzeigen, **durch**:

- Vergleichen der ersten Datenversion und der aktualisierten Datenversion zum Identifizieren von Speicherblockähnlichkeiten;
- Erzeugen von Kopierbefehlen für Speicherblöcke, die als identisch identifiziert werden;
- Erzeugen von Hinzufügebefehlen für Speicherblöcke, die in der aktualisierten Datenversion, aber nicht in der ersten Datenversion vorhanden sind,
wobei für Speicherblöcke, die als identisch identifiziert werden und die beschädigten Speicherblöcken entsprechen, ein Hinzufügebefehl anstelle eines Kopierbefehls zum Einfügen eines authentischen aktualisierten Speicherblocks erzeugt wird; und

- Laden der erzeugten Anweisungen zur differenziellen Aktualisierung in das mobile Endgerät, wobei die Anweisungen zur differenziellen Aktualisierung das mobile Endgerät veranlassen, die aktualisierte Datenversion aus den gegenwärtig gespeicherten Daten und den geladenen Aktualisierungsanweisungen zu erzeugen.

**19.** Computerlesbares Medium, umfassend ein Computerprogramm nach Anspruch 17 oder 18.

## Revendications

**1.** Procédé de mise à jour différentiellement de données mémorisées dans une mémoire d'un terminal mobile, la mémoire étant divisée en une pluralité de blocs de mémoire, à une version de données mises à jour, le procédé comprenant l'étape consistant à :

- identifier parmi les données dans le terminal mobile les blocs de mémoire, le cas échéant, qui sont corrompus ;
- et **caractérisé par** les étapes supplémentaires consistant à :

- générer des instructions de mise à jour différentielles basées sur une première version de données correspondant à une identification de la version des données actuellement mémorisées sur le terminal mobile et la version de données mises à jour et sur une information relative aux blocs de mémoire corrompus identifiés, la génération comprenant de
- comparer la première version de données et la version de données mise à jour pour identifier des similarités entre les blocs de mémoire ;
- générer des commandes de copie pour les blocs de mémoire qui sont identifiés comme étant identiques ;
- générer des commandes d'ajout pour les blocs de mémoire qui sont présents dans la version de données mise à jour dans la première version de données, dans lequel pour les blocs de mémoire qui sont identifiés comme étant identiques et qui correspondent aux blocs de mémoire corrompus, une commande d'ajout au lieu d'une commande de copie est générée pour insérer un bloc de mémoire mis à jour authentique ;
- charger les instructions de mise à jour différentielles dans le terminal mobile ; et
- générer la version de données mise à jour par le terminal mobile d'après les données actuellement mémorisées et les instructions de mis eà jour différentielle chargées.

**2.** Procédé selon la revendication 1, dans lequel les instructions de mise à jour différentielle incluent des données de mise à jour ; et dans lequel générer la version de données mise à jour comprend de remplacer les données mémorisées dans un ou plusieurs blocs de mémoire prédéterminés par lesdites données de mise à jour.

**3.** Procédé selon la revendication 2, dans lequel les données de mise à jour incluent un ou plus blocs de mémoire réparés de données cohérentes avec la version de données mise à jour, le ou les blocs de mémoire réparés de données correspondant à un ou plusieurs blocs de mémoire de données corrompus identifiés.

**4.** Procédé selon une quelconque des revendications 1 à 3, dans lequel générer les instructions de mise à jour différentielle comprend de générer des instructions amenant le terminal mobile à générer la version de données mise à jour d'après les données mémorisées à l'exclusion du ou des blocs de mémoire corrompus identifiés, le cas échéant, et d'après les instructions de mise à jour différentielle.

**5.** Procédé selon une quelconque des revendications 1 à 3, dans lequel générer les instructions de mise à jour différentielle est effectué par un système de traitement de données distant.

**6.** Procédé selon la revendication 5, dans lequel le terminal mobile et le système de traitement de données distant communiquent via une liaison de communication sans fil.

**7.** Procédé selon les revendications 5 ou 6, dans lequel le terminal mobile et le système de traitement de données distant communiquent via un protocole Internet.

**8.** Procédé selon une quelconque des revendications 5 à 7, dans lequel l'identification est effectuée par le terminal mobile et l'identification comprend en outre d'émettre une information relative au ou aux blocs de mémoire corrompus identifiés du terminal mobile au système de traitement de données distant.

**9.** Procédé selon une quelconque des le procédé comprend d'émettre une information relative aux données mémorisées du terminal mobile au système de traitement de données distant et dans lequel l'identification est effectuée par le système de traitement de données distant sur la base de l'information émise.

**10.** Procédé selon une quelconque des revendications 1 à 9, dans lequel l'identification comprend de :

- calculer un nombre de sommes de vérification par le terminal mobile, dans lequel chaque somme de vérification correspond à un bloc de mémoire correspondant de données mémorisé dans le terminal mobile ; et
- comparer les sommes de vérification calculées avec un nombre de référence de sommes de vérification afin d'identifier tout bloc de mémoire de données corrompu.

**11.** Procédé selon la revendication 10 en dépendance de la revendication 8, dans lequel les sommes de vérification de référence sont mémorisées dans le terminal mobile et dans lequel la comparaison est effectuée par le terminal mobile.

**12.** Procédé selon la revendication 11, dans lequel les sommes de vérification de référence mémorisées dans le terminal ont leur intégrité protégée par un code d'authentification de message.

**13.** Procédé selon la revendication 10 en dépendance de la revendication 9, dans lequel les sommes de vérification de référence sont mémorisées sur le système de traitement de données distant ; dans lequel l'information émise comprend les sommes de vérification calculées ; et dans lequel l'identification comprend en outre de comparer les sommes de vérification calculées émises par le système de traitement de données distant avec le nombre de sommes de vérification de référence mémorisées sur le système de traitement de données distant.

**14.** Procédé selon une quelconque des revendications 10 à 13, dans lequel le calcul comprend de calculer les sommes de vérification comme une fonction de hachage unidirectionnelle cryptographiquement forte du bloc de mémoire correspondant de données mémorisées.

**15.** Terminal mobile comprenant :

- une mémoire de données pour mémoriser des données, la mémoire de données étant divisée en une pluralité de blocs de mémoire ;
- un moyen de communication adapté afin de recevoir depuis un système de traitement de données des instructions de mise à jour différentielle pour mettre à jour les données mémorisées dans la mémoire de données à une version de données mise à jour ;
- un moyen de traitement adapté afin de générer la version de données mise à jour d'après les données actuellement mémorisées et les instructions de mise à jour différentielle reçues ;

**caractérisé en ce que** le moyen de traitement est en outre adapté afin de générer une information d'après les données mémorisées indicatives de la présence ou l'absence d'un ou plusieurs blocs de mémoire corrompus et communiquer l'information générée via le moyen de communication au système de traitement de données pour générer les instructions de mise à jour différentielle sur la base d'une première version de données correspondant à une identification de la version de données actuellement mémorisée sur le terminal mobile et la version de données mise à jour et sur l'information générée relative aux blocs de mémoire corrompus en

- comparant la première version de données et la version de données mise à jour pour identifier des similarités entre les blocs de mémoire ;
- générant des commandes de copie pour les blocs de mémoire qui sont identifiés comme étant identiques ;
- générant des commandes d'ajout pour les blocs de mémoire qui sont présents dans la version de données mise à jour mais pas dans la première version de données, dans lequel pour les blocs de mémoire qui sont identifiés comme étant identiques et qui correspondent aux blocs de mémoire corrompus, une commande d'ajout au lieu d'une commande de copie est générée pour insérer un bloc de mémoire mis à jour authentique.

**16.** Système de traitement de donnes pour faciliter des données mises à jour différentiellement mémorisées dans une mémoire d'un terminal mobile, la mémoire étant divisée en une pluralité de blocs de mémoire, à une version de données mise à jour, le système de traitement de données comprenant un moyen pour charger des instructions de mise à jour différentielles dans le terminal mobile, les instructions de mise à jour différentielles amenant le terminal mobile à générer la version de données mis eà jour d'après les données actuellement mémorisées et les instructions de mise à jour différentielles chargées ; **caractérisé en ce que** le système de traitement de données comprend en outre :

- un moyen pour recevoir une information provenant du terminal mobile indicative de la présence ou l'absence d'un ou plusieurs blocs de mémoire corrompus ; et
- un moyen de traitement adapté afin de générer les instructions de mise à jour différentielle d'après une première version de données correspondant à une identification de la version de données actuellement mémorisées sur le terminal mobile et les versions de données mises à jour et d'après l'information reçue en
- comparant la première version de données et la version de données mise à jour pour identifier des similarités entre les blocs de mémoire ;
- générant des commandes de copie pour les blocs de mémoire qui sont identifiés comme étant identiques ;
- générant des commandes d'ajout pour les blocs de mémoire qui sont présents dans la version de données mise à jour mais pas dans la première version de données, dans lequel pour les blocs de mémoire qui sont identifiés comme étant identiques et qui correspondent aux blocs de mémoire corrompus, une commande d'ajout au lieu d'une commande de copie est générée pour insérer un bloc de mémoire mis à jour authentique.

**17.** Programme informatique comprenant un moyen de code de programme adapté afin d'amener un terminal mobile à mettre à jour différentiellement des données mémorisées dans une mémoire du terminal mobile, la mémoire étant divisée en une pluralité de blocs de mémoire, à une version de données mise à jour, **caractérisé par** effectuer les étapes suivantes, quand le programme est exécuter sur le terminal mobile :

- générer une information d'après les données mémorisées indicative de la présence ou l'absence d'un ou plusieurs blocs de mémoire corrompus ;
- communiquer l'information générée à un système de traitemen de données pour générer des instructions de mise à jour différentielle sur la base d'une première version de données correspondant à une identification de la version de données actuellement mémorisées sur le terminal mobile et la version de données mise à jour et sur l'information générée relative aux blocs de mémoire corrompus en :

- comparant la première version de données et la version de données mise à jour pour identifier des similarités entre les blocs de mémoire ;
- générant des commandes de copie pour les blocs de mémoire qui sont identifiés comme étant identiques ;
- générant des commandes d'ajout pour les blocs de mémoire qui sont présents dans la version de données mise à jour mais pas dans la première version de données, dans lequel pour les blocs de mémoire qui sont identifiés comme étant identiques et qui correspondent aux blocs de mémoire corrompus, une commande d'ajout au lieu d'une commande de copie est générée pour insérer un bloc de mémoire mis à jour authentique,
- charger les instructions de mise à jour différentielle dans le terminal mobile ; et
- générer la version de données mise à jour par le terminal mobile d'après les données actuellement mémorisées et les instructions de mise à jour différentielle chargées, incluant de réparer n'importe quel bloc de mémoire corrompu détecté.

**18.** Programme informatique comprenant un moyen de code de programme adapté afin d'amener un système de traitement de données pour faciliter la mise à jour différentielle de données mémorisées dans une mémoire d'un terminal mobile, la mémoire étant divisée en une pluralité de blocs de mémoire, à une version de données mise à jour, **caractérisé par** effectuer les étapes suivantes, quand le programme est exécuté sur le système de traitement de données :

- générer des instructions de mise à jour différentielle d'après une première version de données correspondant à une identification de la version des données actuellement mémorisées sur le terminal mobile et les versions de données mises à jour et d'après l'information reçue du terminal mobile, dans lequel l'information reçue est indicative de la présence ou l'absence d'un ou plusieurs blocs de mémoire corrompus en :
- comparant la première version de données et la version de données mise à jour pour identifier des similarités entre les blocs de mémoire ;
- générant des commandes de copie pour les blocs de mémoire qui sont identifiés comme étant identiques ;
- générant des commandes d'ajout pour les blocs de mémoire qui sont présents dans la version de données mise à jour mais pas dans la première version de données, dans lequel pour les blocs de mémoire qui sont identifiés comme étant identiques et qui correspondent aux blocs de mémoire corrompus, une commande d'ajout au lieu d'une commande de copie est générée pour insérer un bloc de mémoire mis à jour authentique,
- charger les instructions de mise à jour différentielle générées dans le terminal mobile, les instructions de mise à jour différentielle amenant le terminal mobile afin de générer la version de données mise à jour d'après les données actuellement mémorisées et les instructions de mise à jour différentielle chargées.

**19.** Support lisible par ordinateur comprenant un programme informatique selon les revendications 17 ou 18.

FIG. 1

FIG. 5

FIG. 2

FIG. 4

322 ⟋

STRT

331 ⟋ SND ID_V2

321 ⟋

332 ⟋ CRCs

312 ⟋ MEM

333 ⟋ COMP

313 ⟋ CRCs

SND (ID_V1, BC1,...BCK)

334 ⟋

335 ⟋

K>0?

BLD ΔF   306   RTR ΔF

337 ⟍   336 ⟋

314 ⟋ K

339 ⟋

SND ΔF

338 ⟋

GEN V2, CRCs, MAC

341 ⟋

REC ACK

ACK

340 ⟋

STP

FIG. 3

FIG. 6

751

752

V1

V2

B1 — A
B2 — B
B3 — C
B4 — D
B5 — E

B1 — D
B2 — A
B3 — F
B4 — G
B5 — B

753

Δ

B5: CP B2
B2: CP B1
B1: CP B4
B3: AD <F>
B4: AD <G>

FIG. 7a

751

752

V1

V2

B1 — A
B2 — B
B3 — C
B4 — D
B5 — E

B1 — D
B2 — A
B3 — F
B4 — G
B5 — B

754

Δ

B5: AD <B>
B2: CP B1
B1: CP B4
B3: AD <F>
B4: AD <G>

FIG. 7b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6018747 A